# FASCICULE DE BREVET EUROPEEN

(11) **EP 3 400 170 B1**
(45) Date de publication et mention de la délivrance du brevet: **11.09.2019**
(21) Numéro de dépôt: 17702674.7
(22) Date de dépôt: 04.01.2017
(51) Int. Cl.: B64C 11/38

(54) **SYSTEME DE COMMANDE DE L'ORIENTATION DES PALES DE SOUFFLANTE D'UNE TURBOMACHINE A PION DE BLOCAGE DE MISE EN DRAPEAU**
SYSTEM ZUR STEUERUNG DER SCHAUFELSTELLUNG IM GEBLÄSE EINES TURBINENTRIEBWERKS, MIT EINEM VERRIEGELUNGSSTIFT FÜR DIE SEGELSTELLUNG
SYSTEM FOR CONTROLLING THE ORIENTATION OF THE FAN BLADES OF A TURBINE ENGINE WITH FEATHERING LOCKING PIN

(30) Priorité: 05.01.2016 FR 1650042
(43) Date de publication de la demande: 14.11.2018
(73) Titulaire: Safran Aircraft Engines, 75015 Paris (FR)
(72) Inventeur: YVON, Didier Jean-Louis, 77550 MOISSY-CRAMAYEL CEDEX (FR); MOUTON, Clémentine Charlotte Marie, 77550 MOISSY-CRAMAYEL CEDEX (FR); PATSOURIS, Emmanuel Pierre Dimitri, 77550 MOISSY-CRAMAYEL CEDEX (FR)
(74) Mandataire: Cabinet Beau de Loménie
(86) Numéro de dépôt international: PCT/FR2017/050013
(87) Numéro de publication internationale: WO 2017/118810

(56) Documents cités:
- WO-A1-2010/130893
- US-A- 2 872 986

## Description

### Arrière-plan de l'invention

La présente invention se rapporte au domaine général des turbomachines équipées d'une ou deux soufflante(s) carénée(s) ou non carénée(s), et plus particulièrement à la commande de l'orientation des pales de soufflante(s) de ces turbomachines.

Un domaine privilégié d'application de l'invention concerne les turboréacteurs à hélices contrarotatives, appelés « Open Rotor » en anglais, qui comprennent deux hélices contrarotatives placées en aval (version « pusher » en anglais) ou en amont (version « puller » en anglais) du générateur de gaz. Toutefois, l'invention s'applique également aux turbopropulseurs à une ou plusieurs hélices propulsives.

Dans un turboréacteur à hélice(s), il est connu que l'orientation (ou calage) des pales qui forment ces hélices constitue l'un des paramètres permettant de gérer la poussée du turboréacteur, notamment en faisant fonctionner l'hélice toujours dans les meilleures conditions possibles. En effet, le régime des hélices est quasiment constant sur toutes les phases de fonctionnement, et c'est le calage des pales des hélices qui fait varier la poussée. Ainsi, en phase de vol de croisière, on cherche à obtenir la plus faible puissance possible sur l'arbre de turbine qui est nécessaire pour une traction donnée à une vitesse de l'avion donnée, de sorte à obtenir le meilleur rendement (c'est-à-dire le rendement permettant de minimiser la consommation de carburant et d'augmenter la distance franchissable). A l'inverse, au décollage, la traction la plus forte possible est recherchée afin d'accélérer puis de faire décoller l'avion.

L'orientation des pales des hélices nécessite de prendre certaines mesures de sécurité afin de s'assurer que les pales ne restent pas bloquées dans certaines positions suite notamment à un disfonctionnement des systèmes de commande de leur orientation. Par exemple, sous leur propre effet centrifuge, les pales ont tendance à se mettre en position à plat (ou position « voile » qui correspond à un calage pour lequel leur corde forme un angle de 90° avec l'axe de rotation de l'hélice). Or, une pale bloquée dans cette position à plat génère peu de couple résistif et risque de partir en survitesse, avec le risque que cela comporte de perdre la pale et/ou le moyeu rotatif qui la porte.

Afin de remédier à ce problème, il est connu d'implanter un dispositif permettant, en cas de panne du système de commande, de forcer les pales à se replacer en position de mise en drapeau et de les maintenir (la position de mise en drapeau correspond à un calage des pales dans lequel la corde des pales s'aligne avec l'axe de rotation de l'hélice, réduisant ainsi la traînée qu'elles génèrent).

Les dispositifs connus pour la mise en drapeau de pales de soufflante (et leur maintien dans cette position) reposent généralement sur le recours à des contrepoids qui, grâce à la force centrifuge appliquée par la rotation du rotor sur lequel ils sont installés, permettent, en cas de défaillance du système de commande de l'orientation des pales, de ramener les pales en position de mise en drapeau.

La spécification pour le dimensionnement de ces contrepoids impose de donner une inertie équivalente sur l'axe de rotation de l'hélice de 2,1 fois (au minimum) l'inertie des pales. Avec une telle contrainte, on conçoit aisément que ce type de dispositif de mise en drapeau engendre une masse supplémentaire très importante sur la turbomachine, augmentant le porte-à-faux et décalant son centre de gravité.

Par ailleurs, il est connu de chercher à réduire l'encombrement des turbomachines à soufflante non carénée, afin d'en réduire la longueur et de rapprocher leur centre de gravité des suspensions à l'avion. Cette contrainte entraîne une forte limitation de la place au sein de la turbomachine. Compte-tenu de l'inertie nécessaire à la mise en drapeau des pales par les contrepoids, ces derniers représentent un encombrement important qu'il est nécessaire de loger à l'intérieur de la turbomachine. Or, sur les « Open Rotor », ces contrepoids sont généralement logés au niveau des pivots des pales de soufflante. Aussi, pour les moteurs présentant un rapport de moyeu faible, l'intégration de ces contrepoids au niveau des pivots des pales s'avère compliqué. De même, s'il fallait les installer à l'intérieur de la turbomachine, leur rayon d'implantation se trouverait plus petit, ce qui nécessiterait une masse plus importante encore.

Le document WO 2010/130893 A1 divulgue un système de commande de l'orientation des pales non-carénées d'une hélice de turbomachine. Il comprend un actionneur relié entre le stator de turbomachine et des moyens de centrage et de guidage en rotation d'un anneau de commande. L'anneau de commande est relié par des organes de liaison du type biellette aux platines de support des pales.

Le document US 2 872 986 A divulgue un système de commande de l'orientation des pales d'une hélice. Un pion de blocage est prévu pour limiter le mouvement de la partie mobile d'un vérin vers une position à plat, et doit être activé manuellement.

### Objet et résumé de l'invention

La présente invention a donc pour but principal de proposer un dispositif de mise en drapeau de pales de soufflante qui ne présente les inconvénients précités.

Conformément à l'invention, ce but est atteint grâce à un système de commande de l'orientation des pales de soufflante d'une hélice de turbomachine, comprenant :
un vérin apte à être solidaire d'un carter de la turbomachine comprenant au moins une partie mobile de telle sorte qu'elle est mobile en translation par rapport audit carter, la partie mobile du vérin étant couplée mécaniquement à un palier de transfert de mouvement ayant une bague externe qui est apte à être couplée à des pivots de pales de soufflante de telle sorte qu'une translation de la partie mobile du vérin entraîne une modification de l'orientation desdites pales de soufflante ; et
au moins un pion de blocage apte à être solidaire du carter de la turbomachine et apte, en cas de disfonctionnement du vérin, à bloquer mécaniquement le palier de transfert de mouvement en position de mise en drapeau des pales de soufflante.

Par « vérin solidaire d'un carter de la turbomachine », on entend ici que le corps de vérin ou la tige de vérin est fixe par rapport au carter de la turbomachine. En fonctionnement normal du vérin, la commande de l'orientation des pales de soufflante est assurée grâce au vérin dont la partie mobile déplace le palier à roulement de transfert de mouvement pour faire librement pivoter les pales de soufflante. Dans cette situation, le pion de blocage est dans une position qui lui permet de ne pas entraver le déplacement de la partie mobile du vérin. En cas de disfonctionnement du vérin de commande de l'orientation des pales, le pion de blocage est amené dans une position qui permet de bloquer mécaniquement en translation le palier de transfert de mouvement, celui-ci ayant été préalablement amené en position de mise en drapeau des pales de soufflante.

Le système selon l'invention permet ainsi, grâce à un simple pion de blocage, de bloquer mécaniquement les pales en position de mise en drapeau en cas de disfonctionnement du vérin de commande de l'orientation des pales. En particulier, aucun contrepoids n'est nécessaire pour réaliser cette fonction, ce qui représente un important gain de masse. De plus, l'encombrement du système selon l'invention est réduit, notamment du fait que le pion de blocage peut aisément être logé à l'intérieur du palier à transfert de mouvement.

De préférence, le pion de blocage est apte à prendre deux positions différentes : une position sortie dans laquelle il vient en appui radial contre une surface interne d'une bague interne du palier de transfert de mouvement, et une position escamotée dans laquelle il est dépourvu d'appui avec ladite bague interne du palier de transfert de mouvement.

Dans ce cas, en position sortie, le pion de blocage est avantageusement apte à venir en appui radial contre différentes rampes d'une rainure longitudinale formée au niveau de la surface interne de la bague interne du palier de transfert de mouvement, lesdites rampes comprenant au moins une première rampe correspondant à une mise en drapeau des pales et une deuxième rampe correspondant à une mise en inversion de poussée des pales.

Le système peut comprendre en outre des moyens hydrauliques pour maintenir le pion de blocage en position escamotée en fonctionnement normal du vérin, et des moyens mécaniques pour maintenir le pion de blocage en position sortie en cas de disfonctionnement du vérin. Ces moyens hydrauliques constituent de préférence également une source d'alimentation du vérin.

De préférence encore, le système comprend en outre une source d'alimentation auxiliaire apte à amener la partie mobile du vérin en position de mise en drapeau des pales de soufflante en cas de disfonctionnement du vérin, le pion de blocage venant alors en appui radial contre la rampe de mise en drapeau des pales pour maintenir mécaniquement ladite partie mobile du vérin dans cette position.

D'amont en aval, les rampes de la bague interne du palier à roulement de transfert de mouvement peuvent comprendre une répartition de rampes suivante : la première rampe correspondant à la mise en drapeau des pales, une rampe intermédiaire, et la deuxième rampe correspondant à la mise en inversion de poussée des pales.

Dans ce cas, la première rampe et la rampe intermédiaire peuvent être séparées par une butée amont, la rampe intermédiaire et la deuxième rampe être séparées par une butée aval, et la rampe intermédiaire peut présenter une pente inclinée vers l'aval par rapport à un axe longitudinal du vérin.

L'invention a également pour objet une turbomachine comprenant au moins un ensemble de pales de soufflante à orientation réglable et un système de commande de l'orientation des pales de soufflante tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe montrant un exemple d'implantation du système selon l'invention ;
- la figure 2 est une vue partielle d'une bague interne du palier à transfert de mouvement selon un mode de réalisation du système selon l'invention ;
- la figure 3 est une vue en coupe d'un pion de blocage selon un mode de réalisation du système selon l'invention ;
- les figures 4A à 4C sont des vues en coupe du système des figures 2 et 3 dans différentes positions de calage des pales de soufflante.

### Description détaillée de l'invention

L'invention s'applique à toute turbomachine équipée d'au moins une soufflante carénée ou non carénée, et dont les pales d'hélice (dans le cas d'une soufflante non carénée) ou les aubes de soufflante (dans le cas d'une soufflante carénée) sont équipées d'un système de changement de pas.

L'invention s'applique en particulier aux turbopropulseurs à une ou plusieurs hélices propulsives, ainsi qu'aux turboréacteurs à hélice(s) (appelés « Open Rotor » en anglais) qui comprennent une hélice (et un stator à calage variable pour l'USF - « Unducted Single Fan », soit « soufflante non carénée unique ») ou deux hélices contrarotatives placées en amont (en version « puller » en anglais) ou en aval (en version « pusher » en anglais) du générateur de gaz. L'invention s'applique encore aux turbomachines à soufflante carénée.

L'architecture de ces types de turbomachines est bien connue de l'homme du métier et ne sera donc pas décrite ici en détails. Brièvement, ces turbomachines comportent une ou plusieurs hélices (dans le cas d'une turbomachine à soufflante non carénée) ou une soufflante (dans le cas d'une turbomachine à soufflante carénée) constituées chacune d'un ensemble de pales (ou d'aubes) de soufflantes à angle de calage variable, c'est-à-dire que leur orientation peut être modifiée au moyen d'un système de commande de l'orientation des pales décrit ci-après.

Dans la suite de la description, on parlera d'hélice et de pales d'hélice indifféremment du fait que l'invention s'applique à une turbomachine à soufflante non carénée ou à une turbomachine à soufflante carénée (auquel cas l'hélice correspond à la soufflante et les pales d'hélice correspondent aux aubes de soufflante).

Une hélice de turbomachine est constituée d'un ensemble de pales de soufflantes à angle de calage variable indépendant ou non, c'est-à-dire que leur orientation peut être modifiée au moyen d'un système de commande de l'orientation des pales.

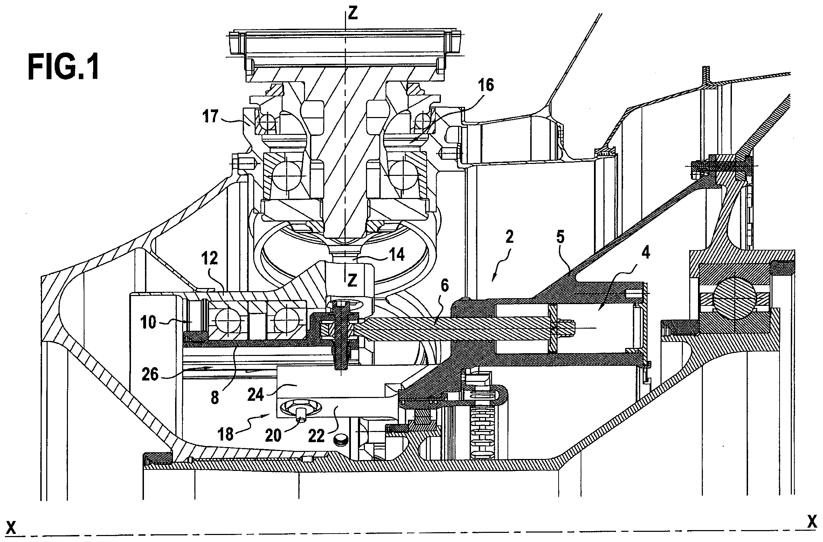

Comme représenté sur la figure 1, ce système de commande peut comprendre un vérin axial 2 centré sur l'axe de rotation des hélices de la turbomachine et fixe par rapport aux structures du moteur.

Plus précisément, le vérin 2 comprend un corps 4 solidaire d'un carter 5 de la turbomachine et une pluralité de tiges 6 (i.e. parties mobiles) qui peuvent translater axialement de manière synchronisée lorsque le vérin est actionné (par l'intermédiaire d'un circuit hydraulique). A leur extrémité libre, les tiges 6 sont reliées à la bague interne 8 d'un palier de transfert de mouvement 10 (appelé LTB pour « Load Transfert Bearing ») dont la bague externe 12 est couplée, par l'intermédiaire de bras de levier 14, à des pivots 16 des pales de soufflante de l'hélice montés sur un anneau rotatif 17 centré sur l'axe X-X de rotation des hélices.

De la sorte, lorsque le vérin 2 est actionné, les tiges 6 translatent pour déplacer le palier de transfert de mouvement 10, ce qui entraîne un pivotement des pivots 16 des pales de soufflante autour de leur axe radial Z-Z, et donc un changement de leur orientation (ou calage).

En fonctionnement normal, les pales de soufflante peuvent ainsi prendre différents calages qui varient par exemple de 0° à 120° par rapport à l'axe X-X de rotation de l'hélice. Un calage à 0° constitue une mise en drapeau des pales qui sera recherchée en cas de disfonctionnement de la turbomachine car il s'agit de la position la moins contraignante pour la turbomachine et l'aéronef (la traînée des pales dans cette position est minimale). A l'extrême opposé, un calage à 120° constitue une position d'inversion de poussée.

Enfin, sous leur propre effet centrifuge, les pales peuvent avoir tendance à prendre un calage intermédiaire de 90° avec l'axe de rotation de l'hélice (appelé position à plat ou position « voile »). Or, une pale bloquée dans cette position à plat génère peu de couple résistif et risque de partir en survitesse, avec le risque que cela comporte de perdre la pale et/ou le moyeu rotatif qui la porte et d'entraîner une perte de contrôle de l'aéronef.

On notera qu'il est possible d'avoir une configuration inverse dans laquelle les tiges de vérin sont solidaires du carter de la turbomachine et le corps de vérin est mobile (i.e. parties mobiles) par rapport aux tiges de vérin.

Selon l'invention, il est prévu un dispositif 18 permettant, en cas de disfonctionnement (i.e. panne) du vérin de commande de l'orientation des pales, d'amener les pales en position de mise en drapeau et de les maintenir dans cette position afin d'éviter notamment qu'elles ne passent en position à plat.

Ce dispositif comprend au moins un pion de blocage 20 qui est monté dans un orifice 22 ménagé dans une bande 24 du carter 5 de la turbomachine qui porte le corps 4 du vérin. Cet orifice 22 qui reçoit le pion de blocage est situé en regard de la surface interne de la bague interne 6 du palier à transfert de mouvement, et plus précisément en regard d'une rainure longitudinale 26 formée dans la surface interne de cette bague et s'étendant parallèlement à l'axe X-X.

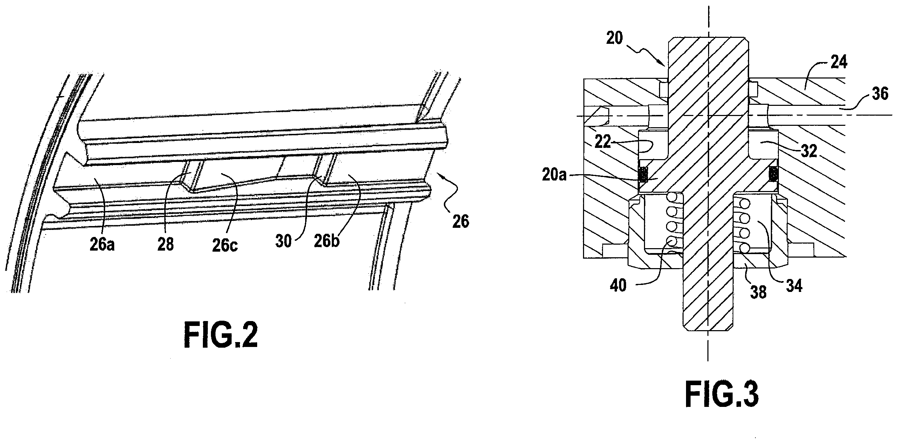

Comme représenté sur la figure 2, la rainure 26 est crantée de sorte à délimiter longitudinalement plusieurs rampes, à savoir ici : une première rampe 26a située à l'extrémité amont de la rainure et correspondant à une mise en drapeau des pales, une deuxième rampe 26b située à l'extrémité aval de la rainure et correspondant à une mise en inversion de poussée des pales, et une rampe intermédiaire 26c ménagée entre la première et la deuxième rampes.

La rampe intermédiaire 26c présente une pente inclinée vers l'aval par rapport l'axe X-X, tandis que la première et la deuxième rampes 26a, 26b peuvent être sensiblement planes (par rapport à cet axe). Enfin, la première rampe 26a et la rampe intermédiaire 26c sont séparées par une butée amont 28, tandis que la rampe intermédiaire et la deuxième rampe 26b sont séparées par une butée aval 30. Le rôle de ces butées sera détaillé ultérieurement en liaison avec le fonctionnement du dispositif.

Le nombre de rainures 26 formées dans la surface interne de la bague interne 6 du palier à transfert de mouvement correspond au nombre de pions de blocage 20. A titre d'exemple, on pourra disposer de trois rainures 26 régulièrement réparties autour de l'axe longitudinal X-X.

La figure 3 représente plus en détails un pion de blocage 20 apte à coopérer avec l'une de ces rainures.

Comme indiqué précédemment, le pion de blocage 20 est logé dans un orifice cylindrique 22 formé dans une bande 24 du carter de la turbomachine qui porte le corps du vérin de commande de l'orientation des pales.

Le pion de blocage 20 présente une collerette annulaire 20a qui divise l'orifice 22 en une chambre supérieure 32 et une chambre inférieure 34. La chambre supérieure 32 est en communication avec un conduit 36 d'un circuit hydraulique de commande du vérin. Quant à la chambre inférieure 34, elle est fermée par un écrou 38 de blocage radial du pion et elle comprend un ressort 40 enroulé autour du pion de blocage et exerçant une force d'extension sur la collerette de celui-ci en direction extérieure.

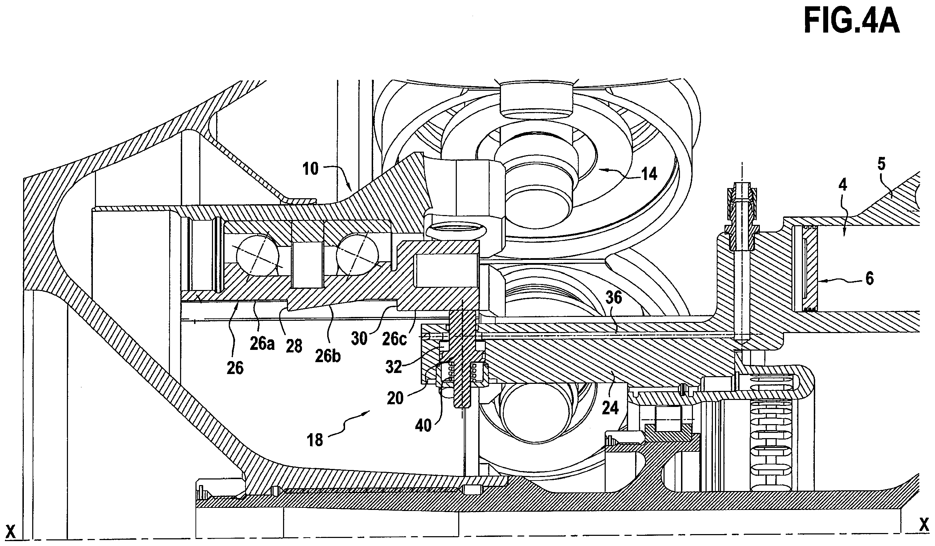

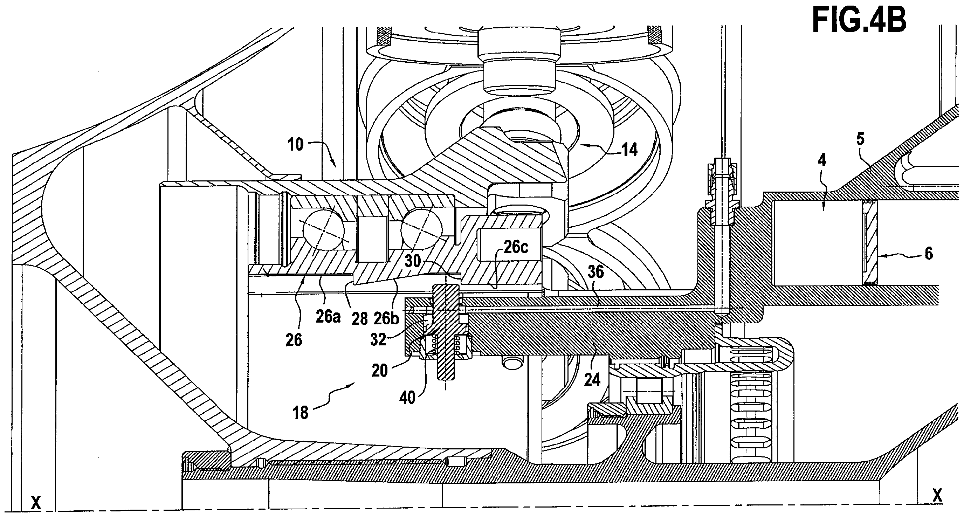

La force d'extension du ressort 40 est prédéfinie de sorte que, lorsque du fluide du circuit hydraulique est admis à l'intérieur de la chambre supérieure 32 (par le conduit 36) et exerce une pression sur la collerette 20a du pion de blocage 20, le ressort est comprimé et le pion de blocage se retrouve dans une position dite «escamotée» (ou rentrée) dans laquelle il ne vient pas en appui radial contre l'une des rampes de la rainure pratiquée dans la bague interne du palier à transfert de mouvement (cas des figures 4A et 4B).

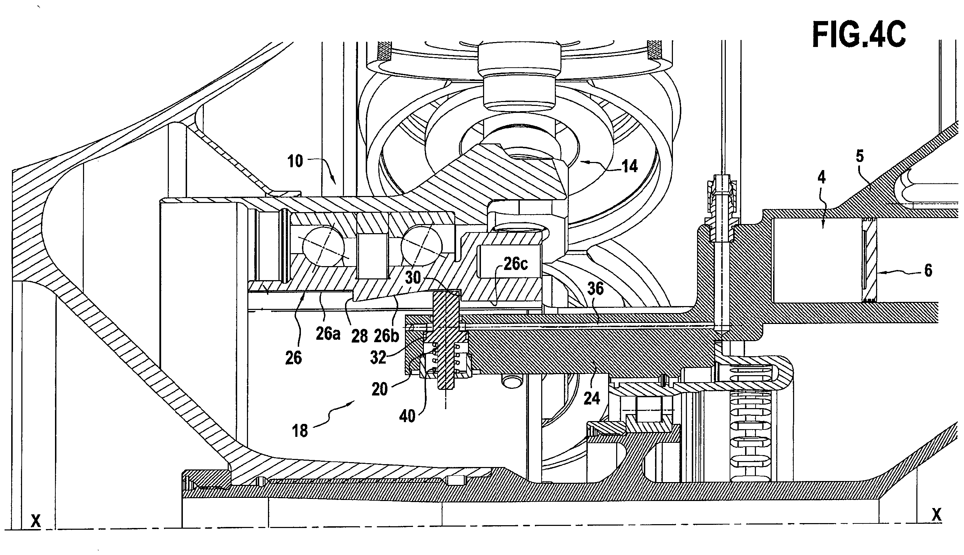

A l'inverse, lorsque la pression exercée par le fluide à l'intérieur de la chambre supérieure 32 faiblit, la force d'extension du ressort 40 pousse le pion de blocage (par sa collerette) vers l'extérieur pour le maintenir dans une position dite « sortie » dans laquelle il vient en appui radial contre l'une des rampes de la rainure pratiquée dans la bague interne du palier à transfert de mouvement (cas de la figure 4C).

Le fonctionnement du dispositif selon l'invention est le suivant.

En fonctionnement normal du vérin 2 de commande de l'orientation des pales (figures 4A et 4B), le circuit hydraulique permet de commander un déplacement de la tige 4 du vérin qui elle-même fait translater le palier de transfert mouvement 10 pour obtenir le calage souhaité des pales de soufflante (par l'intermédiaire des bras de levier 14 et des pivots 16).

Dans cette situation, la chambre supérieure 32 de l'orifice 22 est alimentée en fluide sous pression par le conduit 36, de sorte que le pion de blocage 20 vient en position escamotée et n'entrave pas ainsi le déplacement du palier de transfert de mouvement. Le calage des pales de soufflante s'effectue donc librement. Ainsi, la figure 4A correspond à une position d'inversion de poussée des pales de soufflante (120° par rapport à l'axe de rotation de l'hélice) et la figure 4B correspond à un calage intermédiaire entre la position d'inversion de poussée et la position de mise en drapeau des pales.

En cas de disfonctionnement du vérin 2 de commande de l'orientation des pales, la pression du fluide à l'intérieur de la chambre supérieure 32 faiblit jusqu'à ne plus pouvoir s'opposer à la force d'extension du ressort 40. Ce dernier pousse alors le pion de blocage 20 en position sortie et le maintient dans cette position.

En position sortie, le pion de blocage 20 vient en appui radial contre la rampe de la bague interne 6 du palier de transfert de mouvement qui se trouve en vis-à-vis du pion de blocage.

Ainsi, dans le cas de la figure 4C, le calage des pales de soufflante au moment du disfonctionnement du vérin 2 était dans une position intermédiaire entre la position de mise en drapeau et la position d'inversion de poussée, c'est-à-dire que le pion de blocage se situait en regard de la rampe intermédiaire 26c.

Dans un premier temps, les pales ayant naturellement tendance à revenir vers leur position de mise à plat sous l'effet de leur propre force centrifuge, elles vont entraîner, dans leur mouvement de rotation, une translation du palier de transfert de mouvement vers l'amont (dans le cas des figures 4A à 4C). Au cours de ce mouvement de translation, le pion de blocage 20 va glisser le long de l'inclinaison formée par la rampe intermédiaire 26c pour venir en butée axiale contre la butée aval 30 de la rainure 26 (comme représenté sur la figure 4C).

Dans cette position, le pion de blocage empêche le palier de transfert de mouvement de translater davantage vers l'amont, afin d'éviter aux pales de passer en position à plat sous l'effet de leur force centrifuge.

Dans un second temps, une source d'alimentation auxiliaire (non représentée sur les figures) va s'appliquer sur le vérin 2 pour amener la tige 6 dans une position correspondant à une mise en drapeau des pales. Dans le cas représenté sur les figures 4A à 4C, cette position de mise en drapeau correspond à une position de la tige complètement vers l'aval). Par source d'alimentation auxiliaire, on entend toute source d'énergie (électrique, hydraulique, mécanique, etc.) qui est distincte du circuit hydraulique d'activation du vérin de commande de l'orientation des pales.

Le déplacement de la tige du vérin vers l'aval va entraîner un déplacement du palier de transfert de mouvement, permettant un déplacement relatif du pion de blocage 20 vers l'aval. Ce dernier va alors glisser le long de l'inclinaison formée par la rampe intermédiaire 26c pour passer la butée amont 28. Une fois cette butée amont franchie, la source d'alimentation auxiliaire est coupée.

Dans cette position non représentée sur les figures, le palier de transfert de mouvement se trouve dans une position correspondant à la mise en drapeau des pales de soufflante et le pion de blocage permet de l'y maintenir. En effet, en venant en butée contre la butée amont 28, le pion de blocage permet de contrer l'effet de la force centrifuge des pales qui a tendance à entraîner le palier de transfert de mouvement vers l'amont.

On notera que le maintien en position de mise en drapeau de pales ainsi réalisé par le pion de blocage ne nécessite aucune source d'énergie (le maintien se fait par butée mécanique). De plus, la source d'alimentation auxiliaire qui amène les pales dans cette position de mise en drapeau est ponctuelle et peut être coupée dès que le pion de blocage a franchi la butée amont de la rainure de la bague interne du palier de transfert de mouvement. Le dimensionnement de cette source d'alimentation auxiliaire est donc moins contraignant que si elle devait maintenir cette position, ce qui permet d'avoir une masse moins importante.

## Revendications

1. Système de commande de l'orientation des pales de soufflante d'une hélice de turbomachine, comprenant :
un vérin (2) apte à être solidaire d'un carter (5) de la turbomachine, comprenant une partie mobile (6) de telle sorte qu'elle est mobile en translation par rapport audit carter (5), la partie mobile étant couplée mécaniquement à un palier de transfert de mouvement (10) ayant une bague externe (12) qui est apte à être couplée à des pivots (16) de pales de soufflante de telle sorte qu'une translation de la partie mobile du vérin entraîne une modification de l'orientation desdites pales de soufflante ; **caractérisé par**
au moins un pion de blocage (20) apte à être solidaire du carter de la turbomachine et apte, en cas de disfonctionnement du vérin, à bloquer mécaniquement le palier de transfert de mouvement en position de mise en drapeau des pales de soufflante.

2. Système selon la revendication 1, dans lequel le pion de blocage (20) est apte à prendre deux positions différentes : une position sortie dans laquelle il vient en appui radial contre une surface interne (26) d'une bague interne (6) du palier de transfert de mouvement (10), et une position escamotée dans laquelle il est dépourvu d'appui avec ladite bague interne du palier de transfert de mouvement.

3. Système selon la revendication 2, dans lequel, en position sortie, le pion de blocage (20) est apte à venir en appui radial contre différentes rampes d'une rainure longitudinale formée au niveau de la surface interne de la bague interne du palier de transfert de mouvement, lesdites rampes comprenant au moins une première rampe (26a) correspondant à une mise en drapeau des pales et une deuxième rampe (26b) correspondant à une mise en inversion de poussée des pales.

4. Système selon l'une des revendications 2 et 3, comprenant en outre des moyens hydrauliques (36) pour maintenir le pion de blocage en position escamotée en fonctionnement normal du vérin, et des moyens mécaniques (40) pour maintenir le pion de blocage en position sortie en cas de disfonctionnement du vérin.

5. Système selon la revendication 4, dans lequel le pion de blocage (20) est apte à être logé dans un orifice (22) du carter qui comprend une chambre supérieure (32) en communication avec un circuit hydraulique et une chambre inférieure (34) comprenant un ressort (40) apte à maintenir le pion de blocage en position sortie en cas de disfonctionnement du vérin.

6. Système selon la revendication 5, dans lequel le circuit hydraulique constitue également une source d'alimentation du vérin (2).

7. Système selon l'une quelconque des revendications 4 à 6, comprenant en outre une source d'alimentation auxiliaire apte à amener la partie mobile du vérin en position de mise en drapeau des pales de soufflante en cas de disfonctionnement du vérin, le pion de blocage venant alors en appui radial contre la première rampe (26a) pour maintenir mécaniquement ladite partie mobile du vérin dans cette position.

8. Système selon l'une quelconque des revendications 3 à 7, dans lequel, d'amont en aval, les rampes de la bague interne du palier à roulement de transfert de mouvement comprennent une répartition de rampes suivante : la première rampe (26a) correspondant à la mise en drapeau des pales, une rampe intermédiaire (26b), et la deuxième rampe (26c) correspondant à la mise en inversion de poussée des pales.

9. Système selon la revendication 8, dans lequel la première rampe (26a) et la rampe intermédiaire (26c) sont séparées par une butée amont (28), la rampe intermédiaire et la deuxième rampe (26b) sont séparées par une butée aval (30), et la rampe intermédiaire présente une pente inclinée vers l'aval par rapport à un axe longitudinal du vérin.

10. Turbomachine comprenant au moins un ensemble de pales de soufflante à orientation réglable et un système de mise en drapeau des pales de soufflante selon l'une quelconque des revendications 1 à 9.

## Patentansprüche

1. System zur Steuerung der Ausrichtung der Gebläseschaufeln eines Turbomaschinenpropellers, umfassend:
einen Zylinder (2), der geeignet ist, mit einem Gehäuse (5) der Turbomaschine fest verbunden zu sein, umfassend einen Teil (6), der derart beweglich ist, dass er in Bezug auf das Gehäuse (5) verschiebebeweglich ist, wobei der bewegliche Teil mit einem Bewegungsübertragungslager (10) mechanisch gekoppelt ist, das einen Außenring (12) aufweist, welcher geeignet ist, mit Drehzapfen (16) von Gebläseschaufeln gekoppelt zu sein, so dass eine Verschiebung des beweglichen Teils des Zylinders zu einer Änderung der Ausrichtung der Gebläseschaufeln führt,
**gekennzeichnet durch**
wenigstens einen Blockierstift (20), der geeignet ist, mit dem Gehäuse der Turbomaschine fest verbunden zu sein, und geeignet ist, im Falle einer Funktionsstörung des Zylinders das Bewegungsübertragungslager in der Position zur Verstellung der Gebläseschaufeln in Richtung Fahne mechanisch zu blockieren.

2. System nach Anspruch 1, bei dem der Blockierstift (20) geeignet ist, zwei verschiedene Positionen einzunehmen: eine ausgefahrene Position, in der er an einer Innenfläche (26) eines Innenrings (6) des Bewegungsübertragungslagers (10) in radiale Anlage gelangt, und eine eingefahrene Position, in der er mit dem Innenring des Bewegungsübertragungslagers nicht in Anlage ist.

3. System nach Anspruch 2, bei dem der Blockierstift (20) in der ausgefahrenen Position geeignet ist, an unterschiedlichen Rampen einer Längsnut, welche im Bereich der Innenfläche des Innenrings des Bewegungsübertragungslagers ausgebildet ist, in radiale Anlage zu gelangen, wobei die Rampen wenigstens eine erste Rampe (26a) umfassen, die einem Verstellen der Schaufeln in Richtung Fahne entspricht, sowie eine zweite Rampe (26b), die einem In-Schubumkehr-Bringen der Schaufeln entspricht.

4. System nach einem der Ansprüche 2 und 3, ferner umfassend hydraulische Mittel (36) zum Halten des Blockierstiftes in der eingefahrenen Position im normalen Betrieb des Zylinders sowie mechanische Mittel (40) zum Halten des Blockierstiftes in der ausgefahrenen Position im Falle einer Funktionsstörung des Zylinders.

5. System nach Anspruch 4, bei dem der Blockierstift (20) geeignet ist, in einer Öffnung (22) des Gehäuses aufgenommen zu werden, die eine obere Kammer (32) aufweist, welche mit einem Hydraulikkreis in Verbindung steht, sowie eine untere Kammer (34), welche eine Feder (40) umfasst, die geeignet ist, den Blockierstift im Falle einer Funktionsstörung des Zylinders in der ausgefahrenen Position zu halten.

6. System nach Anspruch 5, bei dem der Hydraulikkreis auch eine Versorgungsquelle des Zylinders (2) bildet.

7. System nach einem der Ansprüche 4 bis 6, ferner umfassend eine Hilfsversorgungsquelle, die geeignet ist, den beweglichen Teil des Zylinders im Falle einer Funktionsstörung des Zylinders in die Position zur Verstellung der Gebläseschaufeln in Richtung Fahne zu bringen, wobei der Blockierstift dann an der ersten Rampe (26a) in radiale Anlage gelangt, um den beweglichen Teil des Zylinders in dieser Position mechanisch zu halten.

8. System nach einem der Ansprüche 3 bis 7, bei dem von stromaufwärts nach stromabwärts die Rampen des Innenrings der Wälzlagers zur Bewegungsübertragung eine folgende Rampenverteilung aufweisen: die erste Rampe (26a), die einem Verstellen der Schaufeln in Richtung Fahne entspricht, eine Zwischenrampe (26b) und die zweite Rampe (26c), die dem In-Schubumkehr-Bringen der Schaufeln entspricht.

9. System nach Anspruch 8, bei dem die erste Rampe (26a) und die Zwischenrampe (26c) durch einen stromaufwärtigen Anschlag (28) getrennt sind, die Zwischenrampe und die zweite Rampe (26b) durch einen stromabwärtigen Anschlag (30) getrennt sind und die Zwischenrampe eine in stromabwärtiger Richtung in Bezug auf eine Längsachse des Zylinders geneigte Schräge aufweist.

10. Turbomaschine, umfassend wenigstens eine Anordnung von Gebläseschaufeln mit einstellbarer Ausrichtung und ein System zum Verstellen der Gebläseschaufeln in Richtung Fahne nach einem der Ansprüche 1 bis 9.

## Claims

1. A system for controlling the pitch of fan blades of a turbine engine propeller, the system comprising:
an actuator (2)capable of being secured to a casing (5) of the turbine engine, having a movable portion (6) that is movable in translation relative to said casing (5), the movable portion being capable of being mechanically coupled to a load transfer bearing (LTB) (10) having an outer ring (12) that is coupled to fan blade pivots (16) so that a movement in translation of the movable portion of the actuator leads to a change in the pitch angle of said fan blade, **characterized by**
at least one locking peg (20) capable of being secured to the casing of the turbine engine and suitable, in the event of the actuator malfunctioning, for mechanically locking the load transfer bearing in a position in which the fan blades are feathered.

2. A system according to claim 1, wherein the locking peg (20) is suitable for occupying two different positions: an extended position in which it bears radially against an inside surface (26) of an inner ring (6) of the load transfer bearing (10), and a retracted position in which it does not bear against said inner ring of the load transfer bearing.

3. A system according to claim 2, wherein, in the extended position, the locking peg (20) is suitable for bearing radially against various different ramps of a longitudinal groove formed in the inside surface of the inner ring of the load transfer bearing, said ramps comprising at least one first ramp (26a) corresponding to putting the blades in a feathered position and at least one second ramp (26b) corresponding to putting the blades into a thrust reversal position.

4. A system according to claim 2 or claim 3, further comprising hydraulic means (36) for holding the locking peg in the retracted position during normal operation of the actuator, and mechanical means (40) for holding the locking peg in the extended position in the event of the actuator malfunctioning.

5. A system according to claim 4, wherein the locking peg (20) is capable of being received in an orifice (22) of the casing, which orifice comprises an upper chamber (32) in communication with a hydraulic circuit and a lower chamber (34) having a spring (40) suitable for holding the locking peg in the extended position in the event of the actuator malfunctioning.

6. A system according to claim 5, wherein the hydraulic circuit also constitutes a power supply of the actuator (2) .

7. A system according to any one of claims 4 to 6, further comprising an auxiliary power supply suitable for bringing the movable portion of the actuator into the fan blade feathered position in the event of the actuator malfunctioning, the locking peg then bearing radially against the first ramp (26a) in order to hold said movable portion of the actuator mechanically in this position.

8. A system according to any one of claims 3 to 7, wherein, from upstream to downstream, the ramps in the inner ring of the load transfer rolling bearing comprise the following distribution of ramps: the first ramp (26a) corresponding to the blades in the feathered position; an intermediate ramp (26b); and the second ramp (26c) corresponding to the blades in the thrust reversal position.

9. A system according to claim 8, wherein the first ramp (26a) and the intermediate ramp (26c) are separated by an upstream abutment (28), the intermediate ramp and the second ramp (26b) are separated by a downstream abutment (30), and the intermediate ramp presents a slope that is inclined downstream relative to a longitudinal axis of the actuator.

10. A turbine engine including at least one set of adjustable pitch fan blades and a system for feathering fan blades according to any one of claims 1 to 9.
